# EUROPÄISCHE PATENTSCHRIFT

(11) **EP 1 479 842 B1**
(45) Veröffentlichungstag und Bekanntmachung des Hinweises auf die Patenterteilung: **19.11.2008**
(21) Anmeldenummer: 04100278.3
(22) Anmeldetag: 27.01.2004
(51) Int. Cl.: E04C 3/07

(54) **Hohlprofil**
Hollow section
Profilé creux

(30) Priorität: 19.05.2003 DE 10322755
(43) Veröffentlichungstag der Anmeldung: 24.11.2004
(73) Patentinhaber: HILTI Aktiengesellschaft, 9494 Schaan (LI)
(72) Erfinder: Birnbaum, Ulrich, 86929, Penzing (DE); Unverzagt, Stefan, 86929, Penzing (DE); Steingruber, Adrian, 86836, Graben (DE)
(74) Vertreter: Wildi, Roland

(56) Entgegenhaltungen:
- EP-A- 0 906 737
- EP-A- 1 288 387
- DE-A- 3 513 382
- DE-A- 19 740 101
- GB-A- 1 605 408
- US-A- 3 224 154
- US-A- 4 069 638
- US-A- 5 927 041

## Beschreibung

### Technisches Gebiet

Die Erfindung betrifft ein Hohlprofil, insbesondere ein Hohlprofil für ein Montagesystem, aus einem Flachmaterial. An zumindest einer Seitenwand des Hohlprofils ist an dessen Aussenseite zumindest eine Sicke ausgebildet. Die zumindest eine Sicke weist einen zur Aussenseite des Hohlprofils um eine Sickentiefe beabstandeten Sickenboden und zwei gegenüberliegende Sickenwände auf, wobei der Betrag der Sickentiefe der zumindest einen Sicke im Bereich des 0.5- bis 2.0-fachen der Materialstärke des Flachmaterials liegt. Weiter betrifft die Erfindung das Verfahren zur Herstellung eines Profils mit zumindest einer Sicke.

### Stand der Technik

Aus einem Flachmaterial gefertigte Hohlprofile weisen ein geringes Eigengewicht bei guten statischen Werten auf. Zur Positionierung und Führung von Anbinde-, beziehungsweise Anbauteilen werden insbesondere Hohlprofile eines Montagesystems mit Sicken versehen, in denen die Anbindeteile geführt sind. Auf die Hohlprofile wirken infolge der daran angeschlossenen Elemente oftmals Torsionsbelastungen, weshalb im Umfang geschlossene Profile aus statischen Gründen bevorzugt sind. Je tiefer jedoch die Sickentiefe ist, desto geringer ist die Torsionsbelastung, die dieses Profil übernehmen kann. Es ist deshalb angestrebt, die Sickentiefe so gering wie möglich auszubilden.

Standardmässig entspricht das Mass des inneren Biegeradius eines Bleches, welches um 90° gebogen wird, dem Mass der Materialstärke des Blechs. Nachteilig dabei ist, dass bei einer geringen Sickentiefe, bedingt durch die erforderlichen Biegeradien, sich keine senkrecht zum Sickenboden, beziehungsweise senkrecht zur Aussenseite verlaufende Sickenwände realisieren lassen. Werden engere Biegeradien als die Materialstärke des Flachmaterials verwendet, führt dies zu einer Stauchung des Flachmaterials auf der Innenseite und zu einer Streckung des Flachmaterials auf der Aussenseite der Abbiegung, was zu einer Rissbildung, beziehungsweise zu einer Verringerung der Materialfestigkeit führt.

Um engere Biegeradien als das Mass der Materialstärke des Flachmaterials zu ermöglichen, ist es bekannt, auf der Position des Innenradius das Material vorzukerben. Dies führt jedoch zu einer Querschnittsverminderung des Materials und somit ebenfalls zu einer Verringerung der Materialfestigkeit.

Bis anhin wurden bei Sicken mit einer geringen Tiefe diese Probleme umgangen, indem die Sickenwände in einem Winkel, z. B. in einem Winkel von 45°, zum Sickenboden nach aussen verlaufen. Wird ein Anbindeteil mit einer rechteckigen Anlagefläche seitlich belastet, ist bei dieser Ausgestaltung der Sicke nur ein Linienkontakt vorhanden, so dass die in Profillängsrichtung definierte Führung und Verdrehsicherheit des Anbindeteils nicht gewährleistet ist. Ist die Auflagefläche komplementär zur Sickenausgestaltung ausgebildet, entsteht bei einer seitlichen Belastung des Anbindeteils eine schräg zu Kraftrichtung verlaufende Kraftkomponente, die das Anbindeteil aus der Sicke heben kann.

Die EP 1 288 387 A1 zeigt eine Montageschiene mit einem länglichen Schienenkörper von etwa C-förmigem Querschnitt, die an der Aussenkontur der Seitenwände in Längsrichtung verlaufende nutenartige Vertiefungen aufweist, wobei der Betrag der Tiefe der nutenartigen Vertiefungen etwa dem 0.8-fachen der Wandstärke entspricht. Der Querschnitt der Vertiefung normal zur Längsrichtung ist im Wesentlichen rechtwinklig ausgebildet, wobei die Sickenwände im Wesentlichen gerundet verlaufen.

### Darstellung der Erfindung

Aufgabe der Erfindung ist es, ein Hohlprofil aus einem Flachmaterial mit einer Sicke zu versehen, wobei zur Gewährleistung der Übernahme von Torsionsspannungen die Sicke eine geringe Sickentiefe aufweist, und wobei die Sicke eine ausreichende Längs- und Seitenführung für ein Anbindeteil gewährleistet. Das Hohlprofil soll zudem einfach und kostengünstig herstellbar sein.

Die Aufgabe ist durch die Merkmale der unabhängigen Ansprüche gelöst. Vorteilhafte Weiterbildungen sind in den Unteransprüchen dargelegt.

Gemäss der Erfindung sind die Sickenwände der Sicke im Wesentlichen senkrecht zu dem Sickenboden ausgerichtet und im Wesentlichen eben ausgebildet, wobei sich der ebene Abschnitt über einen Grossteil der Sickentiefe erstreckt.

Durch diese Ausgestaltung der zumindest einen Sicke bleiben die statischen Eigenschaften eines aus einem Flachmaterial gefertigten Hohlprofils weitgehend erhalten und eine definierte Längs- und Seitenführung eines Anbinde-, beziehungsweise Anbauteils am Hohlprofil ist gewährleistet. Auf die Querschnittsabmessungen der Sicke abgestimmte Anbindeteile lassen sich im angeordneten Zustand am erfindungsgemässen Hohlprofil weder verdrehen noch seitlich, d. h. in Querrichtung zur Längsachse des Hohlprofils verschieben. Über die im Wesentlichen senkrecht zum Sickenboden ausgerichtete und im Wesentlichen eben ausgebildeten Sickenwände ist ein Flächenkontakt zwischen dem Anbindeteil und dem Hohlprofil gewährleistet, so dass gegenüber Sickenwänden, die in einem Winkel von weniger als 90° zum Sickenboden ausgerichtet sind, trotz der geringen Sickentiefe ein Vielfaches der Kraft übertragen werden kann. Zudem kann das Anbindeteil infolge einer seitlichen Belastung nicht aus der Sicke des erfindungsgemässen Hohlprofils gehoben werden.

Anstelle oder zusätzlich zu diesem kann beispielsweise ein Gleitlager z. B. aus Polyethylen in der Sicke angeordnet werden. Solche Gleitlager werden beispielsweise bei der Anordnung von an dem Hohlprofil aufliegenden Bauteilen vorgesehen, welche z. B. entlang ihrer Längserstreckung beweglich gelagert sind um allfällige Spannungen in diesem Bauteil abzubauen. Solche Bauteile sind beispielsweise Träger oder Leitungsstränge, wie Rohrleitungen oder Lüftungskanäle.

Vorzugsweise beträgt die Sickentiefe der zumindest einen Sicke weniger als das 1.5-fache der der Materialstärke des Flachmaterials. Mit diesen Sickentiefen bleiben die statische n Werte des erfindungsgemässen Hohlprofils weitgehend erhalten und die definierte Führung eines Anbindeteils am Hohlprofil ist trotzdem gewährleistet.

Bevorzugt ist an jeder Seitenwand des Hohlprofils zumindest eine Sicke angeordnet. An einer Seitenwand eines Hohlprofils können auch mehrere Sicken nebeneinander vorgesehen werden. Vorzugsweise weisen alle Sicken im Wesentlichen die gleiche Ausgestaltung und somit die gleiche Sickentiefe und Sickenbreite auf. Insbesondere bei einem erfindungsgemässen Hohlprofil zur Verwendung in einem Montagesystem ist bei einer gleichartigen Ausgestaltung aller angeordneten Sicken eine grosse Flexibilität in der Verwendung des Hohlprofils gewährleistet.

Der Sickenboden der zumindest einen Sicke verläuft vorzugsweise achsparallel zu der entsprechenden Querschnittsachse des Hohlprofils. Bei einem rechtwinkligen Hohlprofil mit vier Seitenwänden und jeweils einer, in jeder Seitenwand ausgebildeten Sicke, verlaufen bevorzugt alle Sickenboden achsparallel zu den entsprechenden Querschnittsachsen. Die Sicken verlaufen vorzugsweise über die ganze Länge des Hohlprofils parallel zu dessen Längsachse.

Vorteilhafterweise sind im Sickenboden der zumindest einen Sicke Montageöffnungen ausgebildet. Diese Montageöffnungen dienen beispielsweise zur Durchführung eines Befestigungsmittels zur Fixierung eines Anbindeteils an dem erfindungsgemässen Hohlprofil. Die Montageöffnungen sind bevorzugt auf die Art des Befestigungsmittels abgestimmt und können z. B. einen runden oder rechteckigen Querschnitt aufweisen.

Vorzugsweise ist das Flachmaterial zur Fertigung des Hohlprofils ein Metallblech, das bevorzugt in einem Rollwalz-/Biegeverfahren bearbeitet ist. Metallblech als Flachmaterial lässt sich einfach und kostengünstig verarbeiten. Mit dem Rollwalz-/Biegeverfahren lassen sich eine Vielzahl von Profilen fertigen. Neben dem Rollwalz-/Biegeverfahren können auch andere Herstellverfahren zur Anwendung kommen, wie beispielsweise ein Stanz-/Biegeverfahren.

Das Verfahren zur Fertigung eines Profils, insbesondere zur Fertigung eines erfindungsgemässen Hohlprofils, aus einem Flachmaterial, das an zumindest einer Seitenwand des Profils an dessen Aussenseite zumindest eine Sicke aufweist, wobei die zumindest eine Sicke einen zur Aussenseite des Hohlprofils um eine Sickentiefe beabstandeten Sickenboden und zwei gegenüberliegende Sickenwände aufweist, umfasst die folgenden Verfahrensschritte:
a) Profilieren der zumindest einen Sicke mit einer Tiefe, die grösser als die gewünschte Endtiefe der Sicke ist;
b) Drücken des Sickenbodens in Gegenrichtung zur ersten Profilierung bis die Tiefe der Sicke im Wesentlichen der gewünschten Endtiefe der Sicke entspricht, wobei die zumindest eine Sicke im Querschnitt eine Schwalbenschwanz-Form ausbildet;
c) Wegdrücken des in den Querschnitt der Sicke ragenden Materials, optional mittels einer Walze; und
d) Biegen des Flachmaterials in die gewünschte Profilform.

Da im ersten Verfahrensschritt die Sickentiefe grösser als die gewünschte Endtiefe der Sicke ausgebildet wird, kann der innere Biegeradius im Wesentlichen dem Mass der Materialstärke des Flachmaterials entsprechen. Dadurch verringert sich die Materialfestigkeit des Flachmaterials im Bereich der Abbiegungen nur unwesentlich. Anschliessend wird der Sickenboden entgegen der Profilierungsrichtung der Sicke zurückgedrückt, bis die gewünschte Endtiefe der Sicke erreicht ist. Bei diesem Bearbeitungsvorgang bildet die Sicke im Querschnitt eine Schwalbenschwanzform aus. Die Breite der Sicke in der Ebene der entsprechenden Seitenwand ist hierbei kleiner als die gewünschte Breite der fertigen Sicke. Das in den Querschnitt hineinragende Material wird anschliessend seitlich weggedrückt, so dass nach diesem Bearbeitungsvorgang die Sicke die gewünschte Breite aufweist. Beim Wegdrücken des überstehenden Materials kann dieses in den im Innenradius befindlichen Freiraum fliessen. Durch das Fliessen des Materials kommt es zu statisch günstigen Materialverfestigungen und Materialanhäufungen in den Bereichen, die sonst unter Belastung den grössten negativen Beanspruchungen ausgesetzt sind. Im Anschluss wird das Flachmaterial in die gewünschte Profilform gebracht. Sämtliche Bearbeitungsschritte zur Fertigung der Sicke erfolgen vorzugsweise in einem Rollwalzverfahren.

Die Materialbeanspruchung findet nicht als Überlagerung der Spannungen im Hauptbiegebereich statt, sondern verlagert sich in die Sickenwände. Dort können sich die Spannungen relativ frei verteilen und das Material wird nicht in diesen Bereichen geschädigt. Zudem können trotz geringer Sickentiefe masslich in der Breite und Tiefe genau definierte senkrecht zum Sickenboden ausgerichtete Sickenwandabschnitte realisiert werden, die als Längs- und Seitenführung für die, auf die Ausgestaltung der Sicke abgestimmte Form- und Anbindeteile dienen.

Vorzugsweise wird nach dem Wegdrücken des in den Querschnitt der Sicke ragenden Materials in einem weiteren Verfahrensschritt der Sickenboden nachgerichtet. Je nach Ausgestaltung der Vorrichtung zur Fertigung der Sicken entstehen bei den einzelnen Verfahrensschritten grosse Abweichungen in den Abmessungen, die ausserhalb der gewünschten Toleranzen liegen. Mittels des Nachrichtens des Sickenbodens werden die Toleranzen auf ein tolerierbares Mass begrenzt. In einer alternativen Ausführungsform des erfindungsgemässen Verfahrens wird die Sicke seitlich und unterhalb z. B. durch Walzen oder ein Auflager beim Wegdrücken des in die Sicke hineinragenden Materials gestützt, so dass auf ein zusätzliches Nachrichten des Sickenbodens verzichtet werden kann.

Bevorzugt umfasst das Verfahren als zusätzlichen Verfahrensschritt das stoffschlüssige Verbinden der freien Längsränder des gebogenen Flachmaterials zu einem Hohlprofil. Die Längsränder werden bevorzugt über deren ganzen Länge miteinander verbunden, beispielsweise miteinander verschweisst, verlötet oder verklebt.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die Erfindung wird nachstehend anhand eines Ausführungsbeispieles näher erläutert. Es zeigen:
- Fig. 1: Einen Querschnitt durch ein erfindungsgemässes Hohlprofil;
- Fig. 2: einen vergrösserten Detailausschnitt der Sickenwand gemäss Bereich II in Fig. 1;
- Fig. 3: den Querschnitt durch das erfindungsgemässe Hohlprofil gemäss Fig. 1 mit angeordneten Anbindeteilen; und
- Fig. 4a-c: Detaildarstellungen des Verfahrens zur Fertigung einer Sicke.

Grundsätzlich sind in den Figuren gleiche Teile mit den gleichen Bezugszeichen versehen.

### Wege zur Ausführung der Erfindung

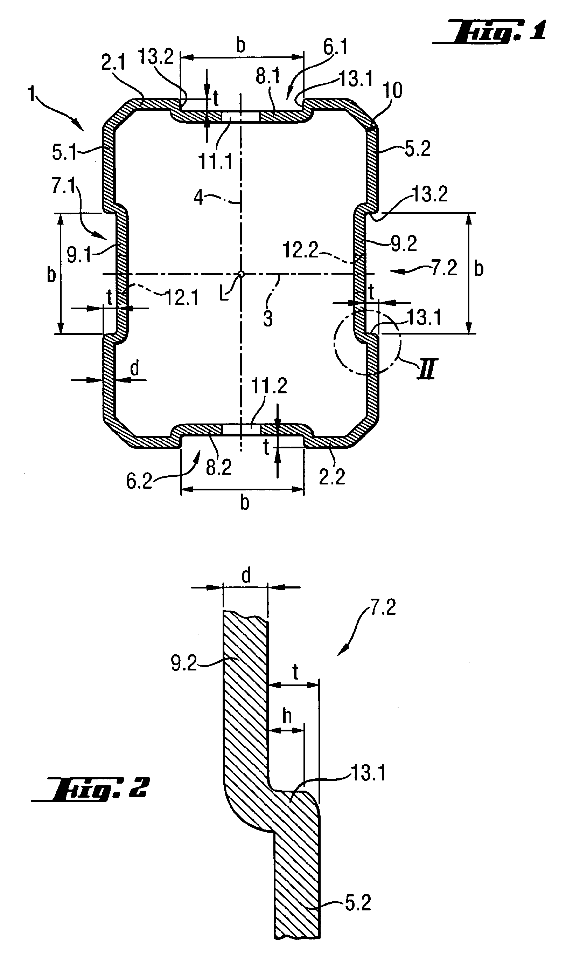

Ein Querschnitt durch ein erfindungsgemässes Hohlprofil ist in der Fig. 1 dargestellt. Das Hohlprofil 1 hat einen im Wesentlichen rechteckigen Querschnitt und weist ein erstes Paar parallel zueinander und zu einer Querschnittsachse 3 verlaufende Seitenwände 2.1 und 2.2 sowie ein zweites Paar parallel zueinander und zu einer Querschnittsachse 4 verlaufende Seitenwände 5.1 und 5.2 auf. Das Hohlprofil 1 weist in diesem Ausführungsbeispiel in Richtung der Querschnittsachse 3 eine kleinere Abmessung als in Richtung der Querschnittsachse 4 auf. Das Hohlprofil 1 ist aus einem Stahlblech in einem Rollwalz-/Biegeverfahren gefertigt und weist eine gleichmässige Materialstärke d auf. Das bearbeitete und profilierte Stahlblech ist mittels einer Schweissnaht 10 zu dem Hohlprofil 1 stoffschlüssig verbunden.

An den Seitenwänden 2.1 und 2.2 ist jeweils eine in Längsrichtung L des Hohlprofils 1 verlaufende Sicke 6.1, bzw. 6.2 und an den Seitenwänden 5.1 und 5.2 ist jeweils eine in Längsrichtung L des Hohlprofils 1 verlaufende Sicke 7.1, bzw. 7.2 als Längs- und Seitenführung für auf die Sickenausgestaltung abgestimmte Form- und Anbindeteile ausgebildet. Die Sicken 6.1, 6.2, 7.1 und 7.2 weisen die gleichen Abmessungen in der Breite b und in der Tiefe t auf. Dies ermöglicht die Anordnung auf diese Sicken 6.1, 6.2, 7.1 und 7.2 abgestimmter Anbindeteile entlang der gesamten Längsrichtung L des Hohlprofils 1 und an jeder Seitenwand 2.1, 2.2, 5.1 oder 5.2, womit eine grosse Anwendungsbreite des Hohlprofils 1 beispielsweise als Montageträger in einem Montagesystem gegeben ist. Dabei ist jede Sicke aus einem Sickenboden 8.1, 8.2, 9.1 oder 9.2 und einem Paar von Sickenwänden 13.1 und 13.2 gebildet.

Der Sickenboden 8.1 der Sicke 6.1 verläuft parallel zur Ebene der Seitenwand 2.1 und der Sickenboden 8.2 der Sicke 6.2 verläuft parallel zur Ebene der Seitenwand 2.2. Der Sickenboden 9.1 der Sicke 7.1 verläuft parallel zur Ebene der Seitenwand 5.1 und der Sickenboden 9.2 der Sicke 7.2 verläuft parallel zur Ebene der Seitenwand 5.2. Im Bereich des Schnittpunkts der Querschnittsachse 4 mit den Sickenboden 8.1 und 8.2 ist in den Sickenboden 8.1 und 8.2 jeweils eine Montageöffnung 11.1, bzw. 11.2 zur Durchführung eines Befestigungsmittels entlang der Querschnittsachse 4 angeordnet. Im Bereich des Schnittpunkts der Querschnittsachse 3 mit den Sickenboden 9.1 und 9.2 ist in den Sickenboden 9.1 und 9.2 jeweils eine Montageöffnung 12.1, bzw. 12.2 zur Durchführung eines Befestigungsmittels entlang der Querschnittsachse 3 angeordnet.

Fig. 2 zeigt einen vergrösserten Detailausschnitt der Sickenwand 13.1 gemäss dem Bereich II in Fig. 1. Die Tiefe t der Sicke 7.2 entspricht etwa dem 1.2-fachen der Materialstärke d des Hohlprofils 1. Die Sickenwand 13.1 ist im Wesentlichen senkrecht zum Sickenboden 9.2 ausgerichtet und weist einen flachen, beziehungsweise ebenen Abschnitt h bezogen auf die Tiefe t von etwa 70% auf. Ein in der Sicke 7.2 angeordnetes Anbindeteil wird in Längsrichtung L des Hohlprofils 1 und in Richtung den Sickenwänden 13.1 und 13.2 geführt.

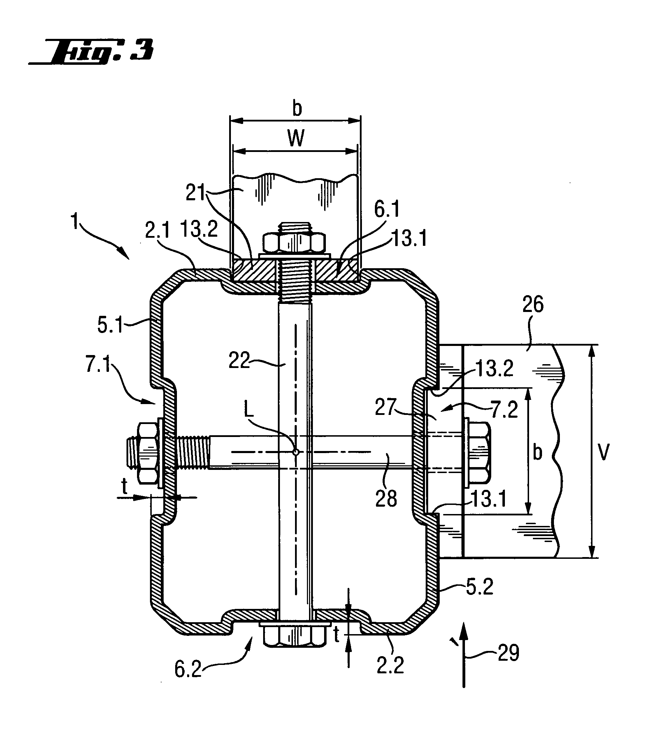

Ein Querschnitt durch das erfindungsgemässe Hohlprofil 1 gemäss Fig. 1 mit angeordneten Anbindeteilen ist in der Fig. 3 dargestellt. In der Sicke 6.1 an der Seitenwand 2.1 ist als ein erstes Anbindeteil der Winkel 21 angeordnet. Der Betrag der Breite W des Winkels 21 ist minimal kleiner als die Breite b der Sicke 6.1 ausgebildet. Der Winkel 21 ist durch die Ausgestaltung der Sicke 6.1 längs der Seitenwand 2.1 und seitlich parallel zur Ebene der Seitenwand 2.1 in den Sickenwänden 13.1 und 13.2 geführt. Mittels der Schlossschraube 22 wird der Winkel 21 an dem Hohlprofil 1 fixiert.

In der Sicke 7.2 an der Seitenwand 5.2 ist als weiteres Anbindeteil der Winkel 26 angeordnet. Die Breite V des Winkels 26 ist grösser als die Breite b der Sicke 7.2 ausgebildet. Der Schenkel 27 zur Anlage des Winkels 26 an dem Hohlprofil 1 weist eine komplementär zur Ausgestaltung der Sicke ausgebildeten Ausgestaltung auf. Mittels der Schlossschraube 28 ist der Winkel 26 an dem Hohlprofil 1 fixiert.

Da die Sicke 7.2, wie auch die anderen Sicken des Hohlprofils 1, im Wesentlichen senkrecht zum jeweiligen Sickenboden ausgerichtete Sickenwände aufweist, steht der Schenkel 27 des Winkels 26 flächig mit den Sickenwänden in Kontakt. Bei einer seitlichen Belastung des Winkels 26 beispielsweise in Richtung des Pfeils 29 entsteht im Bereich der Sicke 7.2 keine wesentliche Kraftkomponente, die den Winkel 26 aus der Sicke 7.2 herausheben kann. Zudem kann über den flächigen Kontakt des Winkels 26 mit den Sickenwänden 13.1 und 13.2 der Sicke 7.2, beziehungsweise des Winkels 26 mit den Sickenwänden 13.1 und 13.2 der Sicke 6.1 ein hoher, seitlicher Kraftanteil übernommen werden.

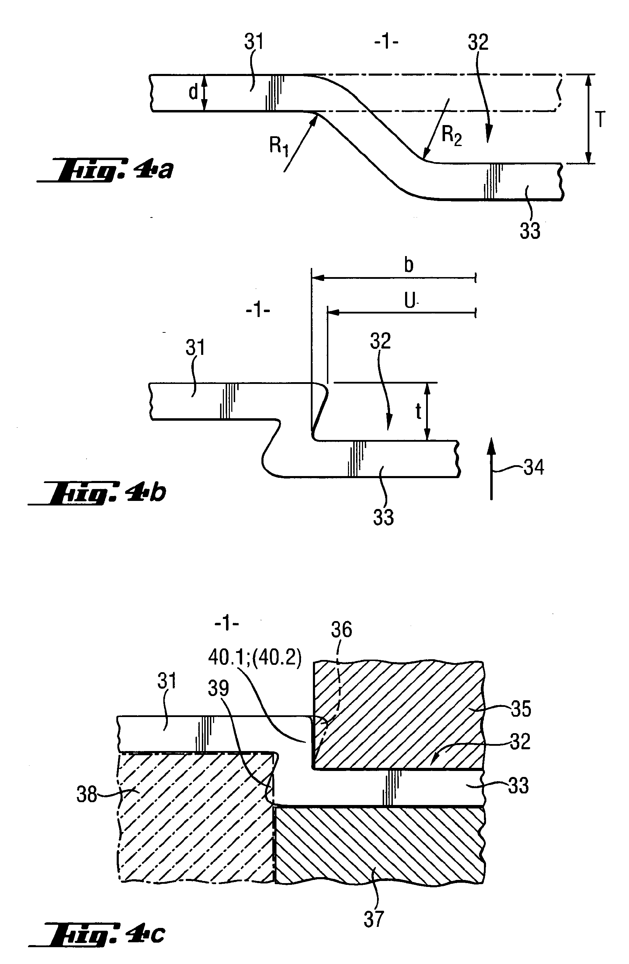

Die Fig. 4a bis 4c zeigen anhand dreier Detaildarstellungen das Verfahren zur Fertigung einer Sicke. Nachfolgend wird die Fertigung der Sicke anhand eines Rollwalzverfahrens erläutert. In ein Flachmaterial 31, beispielsweise einem Stahlblech, wird mittels einer Walze (hier nicht dargestellt) eine Sicke 32 mit einer Tiefe T profiliert. Der Betrag der Tiefe T ist grösser als die gewünschte Endtiefe t, die die fertig ausgebildete Sicke 32 aufweisen soll. Die inneren Biegeradien R₁ und R₂ entsprechen etwa dem Betrag der Materialstärke d des Flachmaterials 31.

Anschliessend wird der Sickenboden 33 in Gegenrichtung zur ersten Profilierung, beziehungsweise in Richtung des Pfeils 34 gedrückt, bis die Sicke 32 die gewünschte Endtiefe t aufweist. Bei diesem Bearbeitungsvorgang bildet die Sicke 32 im Querschnitt eine Schwalbenschwanz-Form aus. Die lichte Weite U der Sicke 32 während diesem Bearbeitungsschritt ist kleiner als die Breite b ausgebildet, welche die Sicke 32 am Ende der Fertigung aufweisen soll.

Mittels einer ersten Kalibrierwalze 35 wird das, in die Sicke 32 hineinragende Material 36 seitlich weggedrückt, wobei das Material zu fliessen beginnt und sich in diesem Bereich verfestigt. Nachfolgend oder während des Wegdrückens des Materials 36 wird der Sickenboden 33 mittels einer Richtwalze 37 ausgerichtet. Zusätzlich kann eine zweite Kalibrierwalze 38 das vorstehende Material 39 ebenfalls seitlich wegdrücken, wodurch auch in diesem Abbiegebereich eine Materialverfestigung geschaffen wird.

Die mit dem erfindungsgemässen Verfahren gefertigte Sicke 32 weist einen grossen Anteil an senkrecht zum Sickenboden 33 ausgerichteten und ebenen Abschnitt der Sickenwände 40.1 und 40.2 auf.

Zusammenfassend ist festzustellen, dass mit der Erfindung ein Hohlprofil aus einem Flachmaterial geschaffen wurde, das trotz der Anordnung von Sicken hohe statische Werte aufweist. Trotz der geringen Sickentiefe ist eine ausreichende Längs- und Seitenführung in der Sicke für an dem Hohlprofil angeordnete Anbindeteile gewährleistet. Das Hohlprofil ist zudem einfach sowie kostengünstig herstellbar und weist ein geringes Eigengewicht auf.

## Patentansprüche

1. Hohlprofil, insbesondere ein Hohlprofil (1) für ein Montagesystem, aus einem Flachmaterial (31) mit einer Materialstärke (d), wobei an zumindest einer Seitenwand (2.1, 2.2, 5.1 oder 5.2) des Hohlprofils (1) an dessen Aussenseite zumindest eine Sicke (6.1, 6.2, 7.1, bzw. 7.2; 32) ausgebildet ist, wobei die zumindest eine Sicke (6.1, 6.2, 7.1, bzw. 7.2; 32) einen zur Aussenseite des Hohlprofils (1) um eine Sickentiefe (t) beabstandeten Sickenboden (8.1, 8.2, 9.1, bzw. 9.2; 33) und zwei gegenüberliegende Sickenwände (13.1, 13.2; 40.1, 40.2) aufweist, wobei der Betrag der Sickentiefe (t) der zumindest einen Sicke (6.1, 6.2, 7.1, bzw. 7.2; 32) im Bereich des 0.5- bis 2.0-fachen der Materialstärke (d) des Flachmaterials (31) liegt, **dadurch gekennzeichnet, dass** die Sickenwände (13.1, 13.2; 40.1, 40.2) der zumindest einen Sicke (6.1, 6.2, 7.1, bzw. 7.2; 32) im Wesentlichen senkrecht zu dem Sickenboden (8.1, 8.2, 9.1, 9.2; 33) ausgerichtet und im Wesentlichen eben ausgebildet sind, wobei sich der ebene Abschnitt (h) über einen Grossteil der Sickentiefe (t) erstreckt.

2. Hohlprofil nach Anspruch 1, **dadurch gekennzeichnet, dass** die Sickentiefe (t) der zumindest einen Sicke (6.1, 6.2, 7.1, bzw. 7.2; 32) weniger als das 1.5-fache der Materialstärke (d) beträgt.

3. Hohlprofil nach Anspruch 1 oder 2, **dadurch gekennzeichnet, dass** an jeder Seitenwand (2.1, 2.2, 5.1, 5.2) des Hohlprofils (1) zumindest eine Sicke (6.1, 6.2, 7.1, bzw. 7.2) angeordnet ist und optional alle Sicken (6.1, 6.2, 7.1, 7.2) im Wesentlichen die gleiche Ausgestaltung aufweisen.

4. Hohlprofil nach einem der Ansprüche 1 bis 3, **dadurch gekennzeichnet, dass** im Sickenboden (8.1, 8.2, 9.1, 9.2) der zumindest einen Sicke Montageöffnungen (11.1, 11.2, 12.1, 12.2) ausgebildet sind.

5. Hohlprofil nach einem der Ansprüche 1 bis 4, **dadurch gekennzeichnet, dass** das Flachmaterial (31) zur Fertigung des Hohlprofils ein Metallblech ist, das optional in einem Rollwalz-/Biegeverfahren bearbeitet ist.

6. Verfahren zur Fertigung eines Profils, insbesondere zur Fertigung eines Hohlprofils (1) nach Anspruch 1, aus einem-Flachmaterial (31) mit einer Materialstärke (d), wobei an zumindest einer Seitenwand des Profils an dessen Aussenseite zumindest eine Sicke (32) ausgebildet ist, wobei die zumindest eine Sicke (32) einen zur Aussenseite des Hohlprofils um eine Sickentiefe (t) beabstandeten Sickenboden (33) und zwei gegenüberliegende Sickenwände (40.1, 40.2) aufweist, **dadurch gekennzeichnet, dass** das Verfahren folgende Verfahrensschritte umfasst:
a) Profilieren der zumindest einen Sicke (32) mit einer Tiefe (T), die grösser als die gewünschte Endtiefe (t) der Sicke (32) ist;
b) Drücken des Sickenbodens (33) in Gegenrichtung zur ersten Profilierung bis die Tiefe der Sicke (32) im Wesentlichen der gewünschten Endtiefe (t) der Sicke (32) entspricht, wobei die zumindest eine Sicke (32) im Querschnitt eine SchwalbenschwanzForm ausbildet;
c) Wegdrücken des in den Querschnitt der Sicke ragenden Materials (36), optional mittels einer Walze (35); und
d) Biegen des Flachmaterials (31) in die gewünschte Profilform.

7. Verfahren nach Anspruch 6, **dadurch gekennzeichnet, dass** nach dem Wegdrücken des in den Querschnitt der Sicke (32) ragenden Materials (36) in einem weiteren Verfahrensschritt der Sickenboden (33) nachgerichtet wird.

8. Verfahren nach Anspruch 6 oder 7, **dadurch gekennzeichnet, dass** das Verfahren als zusätzlichen Verfahrensschritt das stoffschlüssige Verbinden der freien Längsränder des gebogenen Flachmaterials zu einem Hohlprofil umfasst.

## Claims

1. Hollow section, particularly a hollow section (1) for a mounting system, made of a flat material (31) of thickness (d), whereby at least one stiffening corrugation (6.1, 6.2, 7.1 or 7.2; 32) is formed on the outside of at least one lateral face (2.1, 2.2, 5.1 or 5.2) of the hollow section (1), whereby the at least one stiffening corrugation (6.1, 6.2, 7.1, or 7.2; 32) has a stiffening corrugation base (8.1, 8.2, 9.1 or 9.2; 33), which is displaced from the outside of the hollow section (1) by a corrugation depth (t), and two stiffening corrugation sides (13.1, 13.2; 40.1, 40.2), which lie opposite each other, whereby the depth (t) of the at least one stiffening corrugation (6.1, 6.2, 7.1 or 7.2; 32) lies within the range of 0.5 to 2 times the thickness (d) of the flat material (31), **characterized in that** the sides (13.1, 13.2; 40.1, 40.2) of the at least one stiffening corrugation (6.1, 6.2, 7.1 or 7.2; 32) are essentially vertically aligned in relation to the base of the stiffening corrugation (8.1, 8.2, 9.1 or 9.2; 33) and are essentially flat, whereby the flat section (h) extends over a large part of the depth (t) of the stiffening corrugation.

2. Hollow section in accordance with claim 1, **characterized in that** the depth (t) of the least one stiffening corrugation (6.1, 6.2, 7.1 or 7.2; 32) is less than 1.5 times the material thickness (d).

3. Hollow section in accordance with claims I or 2, **characterized in that** at least one stiffening corrugation (6.1, 6.2, 7.1 or 7.2) is disposed on each lateral side (2.1, 2.2, 5.1 5.2) of the hollow section (1) and optionally all stiffening corrugations (6.1, 6.2, 7.1, 7.2) have substantially the same form.

4. Hollow section in accordance with one of claims 1 to 3, **characterized in that** the at least one mounting opening (11.1, 11.2, 12.1, 12.2) is developed in the base of the reinforcing corrugation (8.1, 8.2, 9.1, 9.2).

5. Hollow section in accordance with one of claims 1 to 4, **characterized in that** the flat material (31) used in producing the hollow section is sheet metal that is optionally worked in a roller squeeze/bending process.

6. Process for producing a section, particularly one for producing a hollow section (1) in accordance with claim 1, from flat material (31) having thickness (d), whereby there is a stiffening corrugation (32) on the outside of at least one side of the section, whereby the at least one stiffening corrugation (32) has a base (33), which is separated from the outside of the hollow section by a depth (t), and two stiffening corrugation sides (40.1, 40.2) disposed opposite each other, **characterized in that** the process includes the following process stages:
a) forming of the at least one stiffening corrugation (32) such that it is given a depth (T) that is greater than the required, final depth (t) of the stiffening corrugation (32);
b) pressing the base (33) of the stiffening corrugation (32) in the opposite direction to the first shaping until the depth of the stiffening corrugation (32) essentially corresponds to the required final depth (t), whereby the at least one stiffening corrugation (32) is given a dovetail form as seen in cross-section;
c) pushing the material (36), which extends into the cross-section of the stiffening corrugation (32), away, optionally with a roller (35); and
d) bending the flat material (31) into the required sectional form.

7. Process in accordance with claim 6, **characterized in that** the base (33) of the stiffening corrugation (32) is realigned after the material (36) extending into the cross-section of the stiffening corrugation (32) has been pushed away.

8. Process in accordance with claim 6 or 7, **characterized in that** the process includes, as an additional process stage, bonding of the free ends of the bent, flat material to form a hollow section.

## Revendications

1. Profilé creux, en particulier profilé creux (1) pour un système de montage, en matériau plat (31) ayant une épaisseur de matériau (d), dans lequel au moins un creux (6.1, 6.2, 7.1 ou encore 7.2; 32) est formé sur au moins une paroi latérale (2.1, 2.2, 5.1 ou 5.2) du profilé creux (1) sur son côté extérieur, dans lequel ledit au moins un creux (6.1, 6.2, 7.1 ou encore 7.2; 32) présente un fond de creux (8.1, 8.2, 9.1 ou encore 9.2; 33) espacé par rapport au côté extérieur du profilé creux (1) d'une profondeur de creux (t) et deux parois de creux se faisant face (13.1, 13.2; 40.1, 40.2), dans lequel la valeur de la profondeur de creux (t) dudit au moins un creux (6.1, 6.2, 7.1 ou encore 7.2; 32) est de l'ordre de 0,5 à 2 fois l'épaisseur du matériau (d) du matériau plat (31), **caractérisé en ce que** les parois de creux (13.1, 13.2; 40.1, 40.2) dudit au moins un creux (6.1, 6.2, 7.1 ou encore 7.2; 32) sont orientées de manière essentiellement perpendiculaire par rapport au fond de creux (8.1, 8.2, 9.1, 9.2; 33) et sont réalisées de manière essentiellement planes, la partie plane (h) s'étendant sur une majeure partie de la profondeur de creux (t).

2. Profilé creux selon la revendication 1, **caractérisé en ce que** la profondeur de creux (t) dudit au moins un creux (6.1, 6.2, 7.1 ou encore 7.2; 32) est inférieure à 1,5 fois l'épaisseur de matériau (d).

3. Profilé creux selon la revendication 1 ou 2, **caractérisé en ce qu'**au moins un creux (6.1, 6.2, 7.1 ou encore 7.2) est disposé sur au moins chaque paroi latérale (2.1, 2.2, 5.1, 5.2) du profilé creux (1) et que, facultativement, tous les creux (6.1, 6.2, 7.1, 7.2) présentent essentiellement la même configuration.

4. Profilé creux selon l'une des revendications 1 à 3, **caractérisé en ce que** des ouvertures de montage (11.1, 11.2, 12.1, 12.2) sont réalisées dans le fond de creux (8.1, 8.2, 9.1, 9.2) dudit au moins un creux.

5. Profilé creux selon l'une des revendications 1 à 4, **caractérisé en ce que** le matériau plat (31) pour produire le profilé creux est une tôle métallique qui est facultativement usinée dans un procédé de laminage et de pliage.

6. Procédé pour produire un profilé, en particulier pour produire un profilé creux (1) selon la revendication 1, en matériau plat (31) ayant une épaisseur de matériau (d), dans lequel au moins un creux (32) est formé sur au moins une paroi latérale du profilé sur son côté extérieur, dans lequel ledit au moins un creux (32) présente un fond de creux (33) espacé par rapport au côté extérieur du profilé creux d'une profondeur de creux (t) et deux parois de creux se faisant face (40.1, 40.2), **caractérisé en ce que** le procédé comprend les étapes de procédé suivantes:
a) profiler ledit au moins un creux (32) avec une profondeur (T) qui est plus grande que la profondeur finale (t) souhaitée du creux (32),
b) presser le fond de creux (33) dans le sens opposé au premier profilage jusqu'à ce que la profondeur du creux (32) corresponde essentiellement à la profondeur finale (t) souhaitée du creux (32), ledit au moins un creux (32) formant en section transversale une forme en queue d'aronde,
c) repousser le matériau (36) faisant saillie dans la section transversale du creux, facultativement au moyen d'un cylindre (35), et
d) plier le matériau plat (31) dans la forme de profilé souhaitée.

7. Procédé selon la revendication 6, **caractérisé en ce qu'**après avoir repoussé le matériau (36) faisant saillie dans la section transversale du creux (32), le fond de creux (33) est redressé dans une étape de procédé ultérieur.

8. Procédé selon la revendication 6 ou 7, **caractérisé en ce que** le procédé comprend comme étape de procédé supplémentaire la jonction par liaison de matière des bords longitudinaux libres du matériau plat plié pour former un profilé creux.
